# EUROPEAN PATENT SPECIFICATION

(11) **EP 3 196 005 B1**
(45) Date of publication and mention of the grant of the patent: **19.02.2020**
(21) Application number: 15836539.5
(22) Date of filing: 27.07.2015
(51) Int. Cl.: B29C 70/36, B29C 70/44, H02K 15/03, B29C 70/78, B29C 70/88, H02K 15/12, B29L 31/00, B29K 63/00, B29K 75/00

(54) **VACUUM ASSISTED RESIN INFUSION PROTECTION COATING, SYSTEM AND METHOD FOR PERMANENT MAGNET MOTOR ROTOR**
VAKUUMUNTERSTÜTZTE HARZINFUSIONSSCHUTZBESCHICHTUNG, SYSTEM UND VERFAHREN FÜR EINEN PERMANENTMAGNETMOTORROTOR
REVÊTEMENT DE PROTECTION FORMÉ PAR INFUSION DE RÉSINE SOUS VIDE ET SYSTÈME ET PROCÉDÉ CORRESPONDANTS POUR ROTOR DE MOTEUR À AIMANT PERMANENT

(30) Priority: 27.08.2014 CN 201410428379
(43) Date of publication of application: 26.07.2017
(73) Proprietor: Xinjiang Goldwind Science & Technology Co. Ltd., Xinjiang 830026 (CN)
(72) Inventor: WANG, Dong, Urumqi Xinjiang 830026 (CN); LI, Feifei, Urumqi Xinjiang 830026 (CN); ZHANG, Guotao, Urumqi Xinjiang 830026 (CN)
(74) Representative: Vossius & Partner Patentanwälte Rechtsanwälte mbB
(86) International application number: PCT/CN2015/085220
(87) International publication number: WO 2016/029769

(56) References cited:
- EP-A1- 2 647 492
- EP-A2- 1 367 700
- WO-A1-2009/003476
- CN-A- 101 749 194
- CN-A- 102 013 770
- CN-A- 104 325 657
- CN-B- 101 976 918
- CN-B- 102 166 826
- CN-U- 204 160 781
- US-A- 6 069 421
- US-A1- 2006 220 483
- US-A1- 2009 189 320

## Description

### TECHNICAL FIELD

The present invention relates to a resin infusion protective coating system and method, and in particular to a vacuum assisted resin infusion protective coating system according to claim 1 and method according to claim 9.

### BACKGROUND

For safe operation of a permanent-magnet motor or a permanent-magnet generator, and especically a wind driven generator, the magnetic pole protection thereof is of great importance. In recent years, with rapid development of the wind power generation industry, wind driven generators are becoming larger and larger in size with an increasingly high requirement on the mechanical strength thereof, and are also being used in severer and severer environments. Marine environments, high altitudes, high humid and warm enviomments, and high cold environments and the like bring challenges to the normal running and service life of any wind driven generator. Especially for units operating in severe weather conditions such as coastal humid and warm salt mist, the mechanical fatigue and the magnetic pole corrosion of the units will cause tremendously fatal shortening of the service life thereof.

EP-A- 1 367 700 discloses a vacuum assisted resin infusion coating system and a vacuum resin infusion method.

During facing the above problem, the inventor has figured out the following specific mechanism: during the operation of a permanent-magnet wind driven generator, a rotor of the generator will slightly deform due to various loads, thereby resulting in compressive or tensile deformation of magnetic poles of the rotor; meanwhile, the temperature and humidity changes of the external environment may pose a corrosion threat to the rotor and the magnetic poles of the generator, thereby producing negative effects on the performance and the service life of the generator; especially, the corrosion of the magnetic poles usually starts from pitting corrosion, and then accelerates on the basis of the existing corrosive environment. Hence, on the one hand, the mechanical properties of the magnetic poles need to be enhanced, and to be specific, the mechanical fatigue requirement of the generator during actual running should be met; on the other hand, the magnetic poles need to be strictly protected against corrosion, and to be specific, it is required that the generator should be able to protect, during the life cycle thereof, the magnetic poles against corrosion caused by the environment. The existing rotor production process tends to enhance the mechanical properties with the corrosion protection requirement being ignored, which is disadvantageous for prolonging the service life of the wind driven generator.

To solve this problem, the inventor conceived of hermetically protecting the magnetic poles of a rotor with a resin coating, and found that the existing resin forming process is generally an integral molding process. That is, such a process is not a coating process and cannot be directly used for the protection of the magnetic poles of a rotor. The existing hand lay-up molding or resin transfer mold method based molding processes also have many disadvantages: the hand lay-up molding is not prone to process control with a poor corrosion protection effect, and the resin transfer mold method based molding needs to add the mold cost, and is complex in procedures and high in resin consumption with an ordinary corrosion protection effect.

For a permanent-magnet generator or a permanent-magnet motor, one of the key points of guaranteeing an efficiency of the generator or the motor is to form a favorable air gap between a rotor and a stator thereof. Therefore, if a resin coating is used to hermetically protect the magnetic poles of a rotor, a thickness of the resin coating should be controllable so that the efficiency of the permanent-magnet generator or the permanent-magnet motor can be guaranteed.

Meanwhile, especially for the rotor of a permanent-magnet wind driven generator, the surface, which is required to be covered with the resin coating, of the rotor is complex in structure, and the surfaces of the magnetic poles and the magnetic yoke of the rotor are uneven with numerous gaps and pores. Using the existing technologies, it is difficult to fill the pores, leading to a failure in providing good corrosion protection to the magnetic poles of the rotor. Hence, another technical problem needing to be solved is how to implement a resin coating having relatively good properties.

### SUMMARY

One object of the present disclosure is to provide a vacuum assisted resin infusion protective coating system on a permanent-magnet machine rotor, which allows easy control on a thickness of a resin coating. Another object of the present disclosure is to provide a vacuum assisted resin infusion system on a permanent-magnet machine rotor that can be used to improve mechanical properties of magnetic poles of the rotor and increase a capacity of corrosion resistance thereof. Yet another object of the present disclosure is to provide a vacuum assisted resin infusion method for a permanent-magnet machine rotor that can be used to improve the mechanical properties of the magnetic poles of the rotor and increase a capacity of corrosion resistance thereof.

In order to achieve the above objects, the present disclosure provides a vacuum assisted resin infusion protective coating system according to claim 1. The protective coating comprises a reinforcement, a peel ply and a flow guide medium which are laid on surfaces of magnetic poles of the rotor in sequence. One end of an infusion pipe and the one end of a gas extraction pipe are fixed to an outer side of the flow guide medium, respectively. A vacuum isolation film is hermetically connected to the rotor, and covers the reinforcement, the peel ply, the flow guide medium, the one end of the infusion pipe, and the one end of the gas extraction pipe.

The present disclosure also provides a vacuum assisted resin infusion system on a permanent-magnet machine rotor. The system comprises the above protective coating on the permanent-magnet machine rotor, and further comprises a resin pretreatment device, a liquid feed pump device, and a vacuum generation device;
the resin pretreatment device comprises a resin stirring and deaerating device for stirring and deaerating a two-component resin, and a resin liquid storage tank to which the resin stirring and deaerating device is connected by means of a liquid outlet pipe for stirring and deaerating device;
the resin liquid storage tank is connected to the liquid feed pump device by means of a liquid inlet pipe for pump, and the liquid feed pump device is configured to control a flow rate of the resin flowing through the liquid feed pump device; and
the liquid feed pump is connected to the infusion pipe, while the gas extraction pipe is connected to the vacuum generation device, and the gas extraction pipe is connected with a valve.

The present disclosure also provides a vacuum assisted resin infusion method for a permanent-magnet machine rotor. The method comprises the following steps:
a step of constructing a protective cover: constructing any one of the above protective coatings on
the permanent-magnet machine rotor on magnetic poles of a rotor;
a step of pretreating a resin: stirring and deaerating a two-component resin, and storing the deaerated resin;
a step of maintaining pressure for vacuum: evacuating a space between the vacuum isolation film and the magnetic poles of the rotor, and maintaining a vacuum degree in the space;
a step of vacuum infusion: infusing the stored resin between the vacuum isolation film and the magnetic poles of the rotor at a constant rate;
a step of curing the resin: heating the resin infused between the vacuum isolation film and the magnetic poles of the rotor to warm and cure the resin; and
a step of removing accessories: removing the peel ply and the accessories on an outer side of the peel ply.

The above vacuum assisted resin infusion protective coating for a permanent-magnet machine rotor provided by the present disclosure has the following major beneficial effects: equipment for the vacuum assisted resin infusion forming process is applied to the magnetic pole protection of the permanent-magnet machine rotor, whereby a resin coating may be formed on the surfaces of the magnetic poles of the permanent-magnet machine rotor; also, it is easy to control the thickness of the resin coating on the surfaces of the magnetic poles with no need of molding sleeve tools.

The above vacuum assisted resin infusion system for a permanent-magnet machine rotor and the above vacuum assisted resin infusion method for a permanent-magnet machine rotor provided by the present disclosure have the following major beneficial effects: a vacuum assisted resin infusion forming process and equipment thereof are applied to the magnetic pole protection of the permanent-magnet machine rotor, and may be used to form a resin coating on the surfaces of the magnetic poles of the permanent-magnet machine rotor; it is easy to control the thickness of the resin coating on the surfaces of the magnetic poles; meanwhile, the method and the system can achieve a good infusion effect, and can be used to improve the mechanical properties of the magnetic poles of the rotor and increase the capacity of corrosion resistance thereof thereof.

### BRIEF DESCRIPTION OF THE DRAWINGS

FIG. 1 is a structural schematic diagram of a vacuum assisted resin infusion protective coating for a permanent-magnet machine rotor according to an implementation of the present disclosure, with a rotor wall rather than an entire rotor shown therein;
FIG. 2 is a partial enlarged view of area A in FIG. 1;
FIG. 3 is a structural schematic diagram of a vacuum assisted resin infusion system for a permanent-magnet machine rotor according to an implementation of the present disclosure;
FIG. 4 is a schematic flow diagram of a vacuum assisted resin infusion method for a permanent-magnet machine rotor according to an implementation of the present disclosure.

Reference numerals are explained below:
1, resin pretreatment device; 11, resin stirring and deaerating device; 111, first component inlet pipe; 112, second component inlet pipe; 113, airtight stirring tank; 1131, stirring device; 114, evacuating device for airtight stirring tank; 12, resin liquid storage tank; 13, liquid outlet pipe for stirring and deaerating device; 2, liquid feed pump device; 21, pump; 22, flowmeter; 3, vacuum assisted resin infusion protective coating for a permanent-magnet machine rotor; 31, rotor; 311, magnetic pole; 32, reinforcement; 33, peel ply; 34, flow guide medium; 35, infusion pipe; 36, gas extraction pipe; 361, valve; 37, vacuum isolation film; 38, semipermeable membrane; 39, temperature sensor; 4, vacuum generation device; 41, vacuum pump; 42, vacuum tank; 421, first pressure meter; 43, vacuum valve; 44, buffer tank; 441, second pressure meter; 5, liquid inlet pipe for pump; 6, heating device; 101, step of constructing protective coating; 102, step of pretreating resin; 103, step of maintaining pressure for vacuum; 104, step of vacuum infusion; 105, step of curing resin; and 106, step of removing accessories.

### DETAILED DESCRIPTION

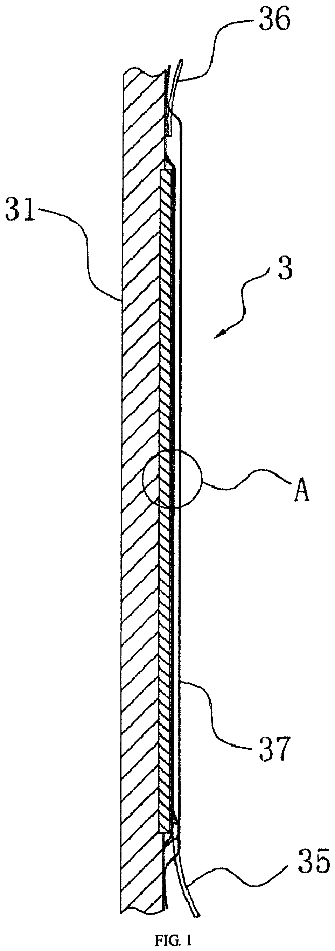

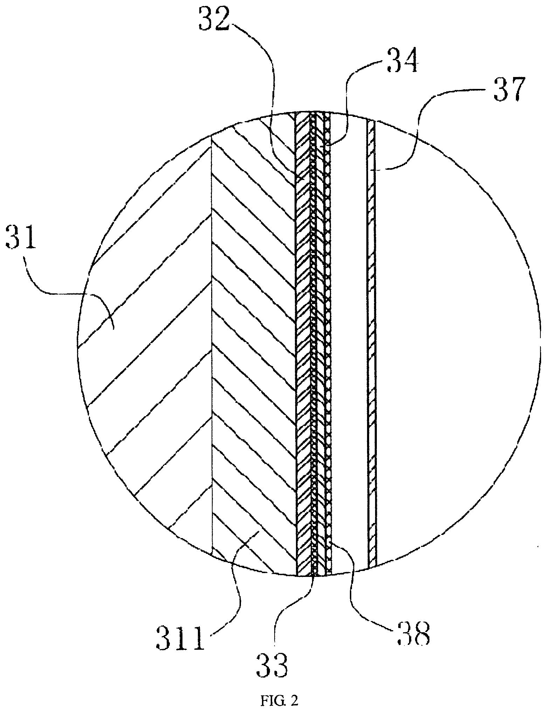

As shown in FIG. 1 and FIG. 2, a vacuum assisted resin infusion protective coating 3 for a permanent-magnet machine rotor according to the present implementation comprises a reinforcement 32, a peel ply 33 and a flow guide medium 34 that are laid on a surface of a rotor 31 in sequence, wherein the rotor 31 is connected with magnetic poles 311. One end of an infusion pipe 35 and one end of a gas extraction pipe 36 are fixed to an outside of the flow guide medium 34. A vacuum isolation film 37 is hermetically connected to the rotor 31, and covers the reinforcement 32, the peel ply 33, the flow guide medium 34, the one end of the infusion pipe 35, and the one end of the gas extraction pipe 36.

According to the vacuum assisted resin infusion protective coating 3 for the permanent-magnet machine rotor provided by this implementation of the present disclosure, equipment for the vacuum assisted resin infusion forming process is applied to the magnetic pole protection for the permanent-magnet machine rotor, whereby a resin coating may be formed on surfaces of the magnetic poles 311 of the permanent-magnet machine rotor; also, it is easy to control a thickness of the resin coating on the surfaces of the magnetic poles 311 without using molding sleeve tools. The vacuum isolation film 37 is hermetically connected to the rotor 31 to form a resin infusion space covering the surfaces of the magnetic poles 311, and the resin is infused into the infusion space. After the resin is cured, a part of the resin will be formed on an inner side of the peel ply 33 (that is, in the reinforcement 32 between the peel ply 33 and the surfaces of the magnetic poles 311, and the remaining resin will be formed on an outer side of the peel ply 33. Thus, when the peel ply 33 is peeled off, the resin at the outer side of the peel ply 33 and accessories such as the flow guide medium 34 can be removed, with the resin at the inner side of the peel ply 33 being remained. Due to easy control on the thickness of the laid reinforcement 32, the thickness of the resin coating also can be controlled easily.

In addition, since the rotor 31 is used as one side of the resin infusion space herein and the vacuum isolation film 37 is used as the other side thereof, the abovementioned vacuum assisted resin infusion forming process is in essence a coating process that differs from an integral forming process in the prior art. With no need of the molding sleeve tools, it further has the advantage of low costs. That is because the molding sleeve tools generally is made of a metal and has relatively high design and manufacturing costs; moreover, the molding sleeve tools is heavy and may incur additional manual operation cost as well as an operation safety risk in use. Furthermore, an operator can observe the infusion of the resin in real time through the vacuum isolation film 37 without being blocked by the molding sleeve tools, and can see a flow direction and a flow rate of the resin clearly, faciliating the operator to perform quality control of the process.

Specifically, a flow guide device for guiding the resin to the flow guide medium 34 may also be fixed to the one end of the infusion pipe 35.

Preferably, the reinforcement 32 can comprise at least one layer of fiber cloth. By laying the layered fiber cloth, a thickness of the reinforcement 32 can be controlled easily; for example, the number of layers of the fiber cloth and the thickness of each layer of the fiber cloth can be selected to control the thickness of the reinforcement 32. The fiber cloth can be organic fiber cloth or inorganic fiber cloth; preferably, the fiber cloth can be glass fiber cloth, carbon fiber cloth or linen, that hashigher cost efficient. Preferably, the fiber cloth can be uniaxial fiber cloth or biaxial fiber cloth that is easier to thoroughly infiltrate with the resin.

Preferably, a semipermeable membrane 38 (i.e., a VAP membrane) can be disposed between the vacuum isolation film 37 and the flow guide medium 34. The one end of the infusion pipe 35 is located between the flow guide medium 34 and the semipermeable membrane 38, while the one end of the gas extraction pipe 36 is located on an outer side of the semipermeable membrane 38; thus, the semipermeable membrane 38 can isolate a space on an inner side of the semipermeable membrane 38 and a space on the outer side of the same. Bubbles possibly existing in the resin can enter the space between the semipermeable membrane 38 and the vacuum isolation film 37 through the semipermeable membrane 38, and the resin is blocked in the space between the semipermeable membrane 38 and the rotor 31. In this way, air permeating the semipermeable membrane 38 can be extracted from the space between the semipermeable membrane 38 and the vacuum isolation film 37 more smoothly under a low resistance, and therefore, a better resin infusion effect can be achieved.

Preferably, an axis of the rotor 31 can be disposed in a vertical direction, and the one end of the infusion pipe 35 is located at a lower end of the magnetic poles 311, while the one end of the gas extraction pipe 36 is located at an upper end of the magnetic poles 311. Thus, the resin can be infused from a bottom of the resin infusion space, and under the action of gravity, the infused resin will gradually fufill the resion insfusion space from bottom to top, achieving synchronous infiltration for all the magnet poles of the rotor.

The "permanent-magnet machine rotor" described in this implementation may be the rotor of a permanent-magnet motor, or may be the rotor of a permanent-magnet generator. Preferably, the permanent-magnet machine rotor can be an outer rotor of a direct-driven permanent-magnet wind driven generator.

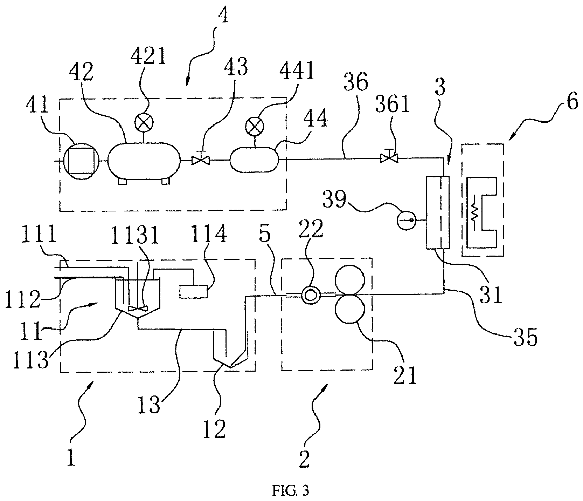

As shown in FIG. 3, it is a structural schematic diagram of a vacuum assisted resin infusion system for a permanent-magnet machine rotor according to an implementation of the present disclosure. The system comprises the protective coating 3 for the permanent-magnet machine rotor according to any one of the above implementations, and further comprises a resin pretreatment device 1, a liquid feed pump device 2, and a vacuum generation device 4. The resin pretreatment device 1 comprises a resin stirring and deaerating device 11 for stirring and deaerating a two-component resin, and a resin liquid storage tank 12 to which the resin stirring and deaerating device 11 is connected by means of a liquid outlet pipe for stirring and deaerating device 13. The resin liquid storage tank 12 is connected to the liquid feed pump device 2 by means of a liquid inlet pipe for pump 5, and the liquid feed pump device 2 is configured to control a flow rate of the resin flowing through the liquid feed pump device 2. The liquid feed pump device 2 is connected to the infusion pipe 35. The gas extraction pipe 36, which is connected with a valve 361, is connected to the vacuum generation device 4.

According to the vacuum assisted resin infusion system for the permanent-magnet machine rotor provided by this implementation of the present disclosure, equipment for vacuum assisted resin infusion forming process is applied to the magnetic pole protection for the permanent-magnet machine rotor, and can be used to form a resin coating on surfaces of the magnetic poles of the permanent-magnet machine rotor; meanwhile, it is easly to contorl a thickness of the resin coating on the surfaces of the magnetic poles, and a good infusion effect can be achieved, facilitating formation of a high-quality coating. The resin stirring and deaerating device 11 stirs and deaerates the two-component resin, such that the resin can be mixed uniformly and gases therein can be removed. The deaerated resin is discharged through the liquid outlet pipe for stirring and deaerating device 13 and stored in the resin liquid storage tank 12. During infusion, the liquid feed pump device 2 can allow the stirred and deaerated resin to be infused onto the surfaces of the magnetic poles of the rotor at a constant rate. These devices cooperate with one another such that the resin is sufficiently infused into various pores in the vacuum assisted resin infusion protective coating 3 for the permanent-magnet machine rotor with almost no bubble; thus, a good infusion effect can be achieved. Due to a great reduction of the porosity and the favorable infusion, the system can be used to improve mechanical properties of the magnetic poles of the rotor and increase a capacity of corrosion resistance thereof.

Preferably, the resin stirring and deaerating device 11 can comprise a first component inlet pipe 111, a second component inlet pipe 112, an airtight stirring tank 113, and an evacuating device for airtight stirring tank 114. The first component inlet pipe 111 and the second component inlet pipe 112 are connected to the airtight stirring tank 113. A stirring device 1131 is disposed in the airtight stirring tank 113. The evacuating device for airtight stirring tank 114 is connected to the airtight stirring tank 113 by means of a deaeration gas extraction pipe, and the airtight stirring tank 113 is connected to the liquid outlet pipe for stirring and deaerating device 13. The two components of the two-component resin can be fed into the airtight stirring tank 113 through the first component inlet pipe 111 and the second component inlet pipe 112, respectively, and are stirred by the stirring device 1131 to be mixed uniformly. The evacuating device for airtight stirring tank 114 extracts gases out of the airtight stirring tank 113 to reduce pressure therein, thereby removing bubbles existing in the resin. The resin is then stored in the resin liquid storage tank 12. Specifically, the airtight stirring tank 113 can be disposed higher than the resin liquid storage tank 12 such that the stirred and deaerated resin can enter the resin liquid storage tank 12 under gravity.

In order to avoid the resin from splashing down to the liquid surface to generate and be mixed with bubbles again when flowing into the resin liquid storage tank 12, further, liquid outlet pipe for stirring and deaerating device 13 can extend into the resin liquid storage tank 12 and contact with an inner wall of the resin liquid storage tank 12, such that the stirred and deaerated resin can flow down along the inner wall of the resin liquid storage tank 12.

Specifically, the liquid feed pump device 2 can use an existing liquid feed pump device having a flow rate regulating function, for example, a peristaltic pump. As shown in FIG. 3, the liquid feed pump device 2 can also comprise a pump 21 and a flowmeter 22 which are connected to each other. The flowmeter 22 is connected to the liquid inlet pipe for pump 5, and the pump 21 is connected to the infusion pipe 35.

The vacuum assisted resin infusion system for the permanent-magnet machine rotor according to this implementation of the present disclosure, further improves the vacuum generation device 4. As shown in FIG. 3, the vacuum generation device 4 can comprise a vacuum pump 41, a vacuum tank 42, a vacuum valve 43 and a buffer tank 44 which are connected one another in sequence. The buffer tank 44 is connected to the gas extraction pipe 36. A first pressure meter 421 is connected to the vacuum tank 42, and a second pressure meter 441 is connected to the buffer tank 44. Then, the vacuum pump 41 and the vacuum tank 42 serve as a primary evacuating unit, while the buffer tank 44 serves as a secondary buffer system. Through two-stage buffering, a more stable vacuum degree can be generated in the vacuum assisted resin infusion protective coating 3 for the permanent-magnet machine rotor. Moreover, after the vacuum valve 43 is closed, the second pressure meter 441 in the secondary buffering system can be used to detect a decreasing rate of the vacuum degree, so as to conveniently detect whether obvious sealing defects exist at positions such as pipe joints in the whole infusion system. Specifically, during detection, close the infusion pipe 35 at first, and evacuate the vacuum tank 42 and the buffer tank 44 by use of the vaccum pump 41; next, close the vacuum valve 43 and observe change of the second pressure meter 441 as the time elapses; a "vacuum degree decreasing rate" can be obtained by calculating the decreasing rate of the reading of the second pressure meter 441 over time, and it can be known whether sealing of the system and connection of pipes are reliable depending on the vacuum degree decreasing rate. Specifically, the infusion pipe 35 can be closed by shutting down the pump, or closing a valve connected in the infusion pipe 35, or clamping the infusion pipe 35 with a pipe clamp.

For the sake of preheating the rotor 31 before infusion and heating the resin after the completion of infusion, the vacuum assisted resin infusion system for the permanent-magnet machine rotor according to this implementation of the present disclosure can further comprise a heating device 6, for heating the resin infused between the vacuum isolation film 37 and the rotor 31. For the sake of the convenience of measuring a heating temperature, a temperature sensor 39 is disposed on the rotor 31. Specifically, the heating device 6 can heat the rotor 31 and the resin in a non-contact manner. For example, the heating device 6 can function in heating by way of resistance wire radiation exposure, i.e., the heating device 6 can be an infrared radiation heating device. With the infrared radiation heating device, a more homogeneous heating effect can be achieved. The heating device 6 also can be other heating devices capable of providing desired ambient temperatures.

For a vacuum assisted resin infusion method for a permanent-magnet machine rotor according to an implementation of the present disclosure, the vacuum assisted resin infusion system for the permanent-magnet machine rotor according to the above implementations can be used to carry out the vacuum assisted resin infusion.

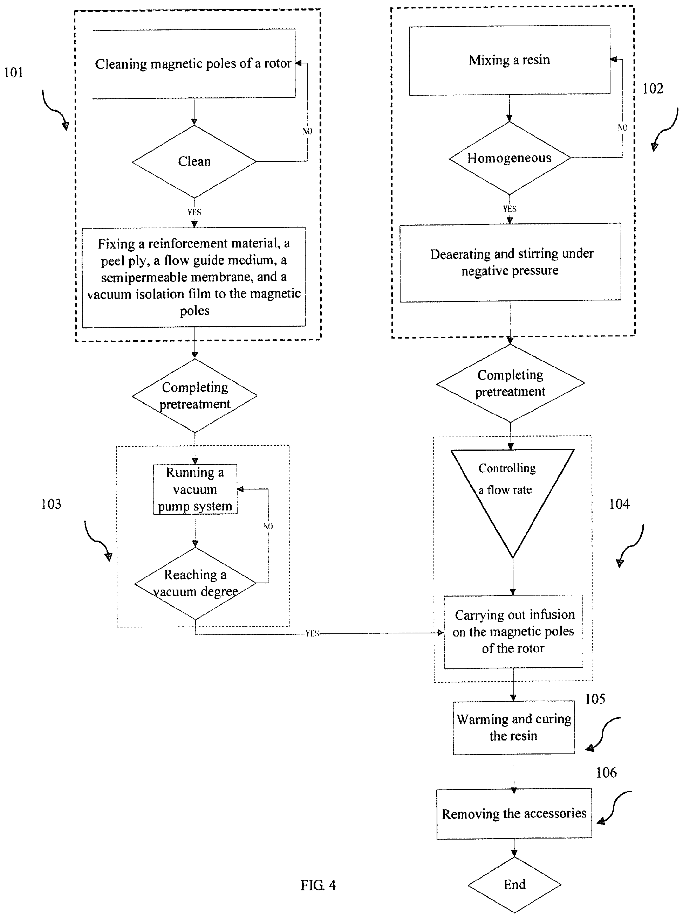

As shown in FIG. 4, it is a schematic flow diagram of the vacuum assisted resin infusion method for a permanent-magnet machine rotor according to an implementation of the present disclosure. For the sake of easy understanding, reference can also be made to FIG. 1 to FIG. 3 simultaneously. The vacuum assisted resin infusion method for the permanent-magnet machine rotor according to the implementation of the present disclosure comprises the following steps:
a step 101 of constructing a protective coating: constructing the protective coating for the permanent-magnet machine rotor according to any one of the above implementations on magnetic poles of a rotor;
a step 102 of pretreating a resin: stirring and deaerating a two-component resin, and storing the deaerated resin;
a step 103 of maintaining pressure for vacuum: evaculating a space between the vacuum isolation film and the magnetic poles of the rotor, and maintaining a vacuum degree in the space;
a step 104 of vacuum infusion: infusing the stored resin between the vacuum isolation film and the magnetic poles of the rotor at a constant rate;
a step 105 of curing the resin: heating the resin infused between the vacuum isolation film and the magnetic poles of the rotor to warm and cure the resin; and
a step 106 of removing accessories: removing the peel ply and the accessories on an outer side of the peel ply.

According to the vacuum assisted resin infusion method for the permanent-magnet machine rotor provided by this implementation of the present disclosure, the vacuum assisted resin infusion forming process is applied to magnetic pole protection of the permanent-magnet machine rotor, and can be used to form a resin coating on surfaces of the magnetic poles of the permanent-magnet machine rotor; it is easy to control a thickness of the resin coating on the surfaces of the magnetic poles; meanwhile, the resin can be sufficiently infused into various pores with almost no bubble, and therefore, a good infusion effect can be achieved, facilitating formation of a high-quality coating. Due to great reduction of the porosity and a favorable infusion, the method can be used to improve mechanical properties of the magnetic poles of the rotor and increase a capacity of corrosion resistance thereof.

Specifically, in the step 102 of pretreating the resin, the resin stirring and deaerating device can be used to stir and deaerate the two-component resin, and the resin liquid storage tank can be used to store the deaerated resin. The way of stirring the two-component resin for mixing can be a batch stirring by use of a stirring device or a continuous stirring by use of a stirring device. The deaerating step and the stirring step can be carried out in succession, or the deaerating step can be carried out separately. The two components in the two-component resin are a resin body and a corresponding curing agent, respectively. For example, the two-component resin may be two-component polyurethane, two-component epoxy resin, or other two-component resins. In the step 103 of maintaining pressure for vacuum, a vacuum generation device can be used to evaculate the resin infusion space. In the step 104 of vacuum infusion, the stored resin can be infused into the resin infusion space through a liquid inlet pipe for pump, a liquid feed pump device and an infusion pipe at a constant rate.

Specifically, the step 102 of pretreating the resin and the step 103 of maintaining pressure for vacuum can be carried out simultaneously and completed at the same time. In addition, "a step 101 of constructing the protective coating" may also be referred to as "a step of pretreating magnetic poles of a rotor". The step 101 of constructing the protective coating and the step 102 of pretreating the resin can be carried out in no particular order, or can be carried out simultaneously. The step 103 of maintaining pressure for vacuum is carried out after the step 101 of constructing the protective coating is completed, and the step 104 of vacuum infusion is carried out after the pretreatment in the step 102 of pretreating the resin is completed and the step 103 of maintaining pressure for vacuum is carried out.

Specifically, step 101 of constructing the protective coating can comprise steps of:
cleaning appurtenances on a surface of a magnetic yoke and the surfaces of magnetic poles of the rotor, and around the magnetic poles;
laying and fixing the reinforcement, the peel ply and the flow guide medium on the surfaces of the magnetic poles in sequence, and fixing the one end of the infusion pipe and the one end of the gas extraction pipe to the outer side of the flow guide medium, respectively; and
covering the reinforcement, the peel ply, the flow guide medium, the one end of the infusion pipe and the one end of the gas extraction pipe with the vacuum isolation film, and hermetically connecting the vacuum isolation film to the rotor.

Preferably, the step 101 of constructing the protective coating can comprise steps of:
cleaning appurtenances on surfaces of a magnetic yoke and the surfaces of magnetic poles of the rotor, and around the magnetic poles;
laying and fixing the reinforcement, the peel ply and the flow guide medium on the surfaces of the magnetic poles in sequence, fixing the one end of the infusion pipe to the outer side of the flow guide medium, fixing the semipermeable membrane to the outer side of the flow guide medium such that the one end of the infusion pipe is located between the flow guide medium and the semipermeable membrane, and fixing the one end of the gas extraction pipe to the outer side of the semipermeable membrane; and
covering the reinforcement, the peel ply, the flow guide medium, the semipermeable membrane, the one end of the infusion pipe and the one end of the gas extraction pipe with the vacuum isolation film, and hermetically connecting the vacuum isolation film to the rotor.

Preferably, in the step 102 of pretreating the resin, the vacuum degree used for deaerating the two-component resin ranges from -40 to -99 kPa, and the time for deaerating ranges from 5 to 30 minutes.

Preferably, in the step 103 of maintaining the pressure for vacuum, the vacuum degree maintained in the resin infusion space ranges from -45 to -85 kPa.

Preferably, in the step 104 of vacuum infusion, the flow rate of the resin infused into the resin infusion space ranges from 200 to 1000 g/min.

Further, the method can also comprise the following step between the step 104 of vacuum infusion and the step 105 of curing the resin:
closing the infusion pipe after the space between the vacuum isolation film and the rotor is filled with the resin, and continuously maintaining the vacuum degree in the gas extraction pipe for 3 to 10 hours.

As a result, all the possibly existing bubbles in the resin infused between the vacuum isolation film and the rotor can be further fully excluded out of the infusion system by maintaining the vacuum degree in the gas extraction pipe for 3-10 hours before the resin is cured, and therefore, porosity of the formed resin can be further reduced. Specifically, a standard for the space between the vacuum isolation film and the rotor being filled with the resin can be the resin flowing onto the upper ends of the magnetic poles and completely covering the upper ends of the magnetic poles.

Preferably, in the step 105 of curing the resin, the resin can be warmed to a range of 40-90 °C, and the temperature is maintained for 4-12 hours.

The "vacuum degree" described in the above implementations refers to "a relative pressure" or "a relative vacuum degree", i.e., a difference value between the pressure of the measured object and the atmospheric pressures at the measurement site.

The foregoing descriptions are merely specific implementations of the present disclosure, and the protection scope of the present disclosure is not limited thereto. Any change or replacement that is easy for a person skilled in the art to conceive of within the technical scope disclosed by the present disclosure should fall within the protection scope of the present disclosure. Hence, the protection scope of the present disclosure should be subject to the protection scope claimed by the appended claims.

## Claims

1. A system comprising a permanent-magnet machine rotor and a vacuum assisted resin infusion protective coating on the permanent-magnet machine rotor, the system further comprising a reinforcement (32), a peel ply (33) and a flow guide medium (34) which are laid on surfaces of magnetic poles (311) of the rotor (31) in sequence, wherein one end of an infusion pipe (35) and one end of a gas extraction pipe (36) are fixed to an outer side of the flow guide medium (34), respectively, and a vacuum isolation film (37) is hermetically connected to the rotor (31), covering the reinforcement (32), the peel ply (33), the flow guide medium (34), the one end of the infusion pipe (35), and the one end of the gas extraction pipe (36),
wherein an axis of the rotor (31) is disposed in a vertical direction, and the one end of the infusion pipe (35) is located at a lower end of the magnetic poles (311), while the one end of the gas extraction pipe (36) is located at an upper end of the magnetic poles (311), and
a semipermeable membrane (38) is disposed between the vacuum isolation film (37) and the flow guide medium (34), and the one end of the infusion pipe (35) is located between the flow guide medium (34) and the semipermeable membrane (38), while the one end of the gas extraction pipe (36) is located on an outer side of the semipermeable membrane (38).

2. The system (3) according to claim 1, **characterized in that**, the reinforcement (32) comprises at least one layer of fiber cloth.

3. The system (3) according to claim 2, **characterized in that**, the fiber cloth is glass fiber cloth, carbon fiber cloth, or linen.

4. The system (3) according to claim 2, **characterized in that**, the fiber cloth is uniaxial fiber cloth, or biaxial fiber cloth.

5. The system according to any one of claims 1-4, whereby it further comprises a resin pretreatment device (1), a liquid feed pump device (2) and a vacuum generation device (4), wherein
the resin pretreatment device (1) comprises a resin stirring and deaerating device (11) for stirring and deaerating a two-component resin, and a resin liquid storage tank (12) to which the resin stirring and deaerating device (11) is connected by means of a liquid outlet pipe for stirring and deaerating device (13);
the resin liquid storage tank (12) is connected to the liquid feed pump device (2) by means of a liquid inlet pipe for pump (5), and the liquid feed pump device (2) is configured to control a flow rate of the resin flowing through the liquid feed pump device (2); and
the liquid feed pump device (2) is connected to the infusion pipe (35), and the gas extraction pipe (36) is connected to the vacuum generation device (4), wherein the gas extraction pipe (36) is connected with a valve (361),
wherein the vacuum generation device (4) comprises a vacuum pump (41), a vacuum tank (42), a vacuum valve (43) and a buffer tank (44) which are connected to one another in sequence, wherein the buffer tank (44) is connected to the gas extraction pipe (36), the vacuum tank (42) is connected with a first pressure meter (421), and the buffer tank (44) is connected with a second pressure meter (441).

6. The system according to claim 5, **characterized in that**, the resin stirring and deaerating device (11) comprises a first component inlet pipe (111), a second component inlet pipe (112), an airtight stirring tank (113), and an evacuating device for airtight stirring tank (114), wherein the first component inlet pipe (111) and the second component inlet pipe (114) are connected to the airtight stirring tank (113), in which a stirring device (1131) is disposed, the evacuating device for airtight stirring tank (114) is connected to the airtight stirring tank (113) by means of a deaeration gas extraction pipe, and the airtight stirring tank (113) is connected to the liquid outlet pipe for stirring and deaerating device (13).

7. The system according to claim 5 or claim 6, **characterized in that**, the liquid feed pump device (2) comprises a pump (21) and a flowmeter (22) which are connected with each other, wherein the flowmeter (22) is connected to the liquid inlet pipe for pump (5), and the pump (21) is connected to the infusion pipe (35).

8. The system according to any one of claims 5-7, further comprising a heating device (6) for heating the resin infused between the vacuum isolation film (37) and the rotor (31), wherein a temperature sensor (39) is disposed on the rotor (31).

9. A vacuum assisted resin infusion method for a permanent-magnet machine rotor, comprising the following steps:
a step of constructing the system (3) of any one of claims 1-8 on magnetic poles (311) of a rotor (31);
a step of pretreating the resin (102): stirring and deaerating a two-component resin, and storing the deaerated resin;
a step of maintaining pressure for vacuum (103): evacuating a space between the vacuum isolation film (37) and magnetic poles (311) of the rotor (31), and maintaining a vacuum degree in the space;
a step of vacuum infusion (104): infusing the stored resin between the vacuum isolation film (37) and the magnetic poles (311) of the rotor (31) at a constant rate;
a step of curing the resin (105): heating the resin infused between the vacuum isolation film (37) and the magnetic poles (311) of the rotor (31) to warm and cure the resin; and
and a step of removing accessories (106): removing the peel ply (33) and accessories (34, 37, 38) on an outer side of the peel ply (33).

10. The vacuum assisted resin infusion method for a permanent-magnet machine rotor according to claim 9, **characterized in that**, the step of constructing the protective coating (101) comprises steps of:
cleaning appurtenances on a surface of a magnetic yoke and the surfaces of the magnetic poles (311) of the rotor (31), and around the magnetic poles (311);
laying and fixing the reinforcement (32), the peel ply (33) and the flow guide medium (34) on the surfaces of the magnetic poles (311) in sequence, and fixing the one end of the infusion pipe (35) and the one end of the gas extraction pipe (36) to the outer side of the flow guide medium (34), respectively; and
covering the reinforcement (32), the peel ply (33), the flow guide medium (34), the one end of the infusion pipe (35) and the one end of the gas extraction pipe (36) with the vacuum isolation film (37), and hermetically connecting the vacuum isolation (37) film to the rotor (31).

11. The vacuum assisted resin infusion method for the permanent-magnet machine rotor according to claim 9, **characterized in that**, the protective coating (3) for the permanent-magnet machine rotor further comprises a semipermeable membrane (38), which is disposed between the vacuum isolation film (37) and the flow guide medium (34), and the one end of the infusion pipe (35) is located between the flow guide medium (34) and the semipermeable membrane (38), while the one end of the gas extraction pipe (36) is located on an outer side of the semipermeable membrane (38),
wherein the step of constructing the protective coating (101) comprises steps of:
cleaning appurtenances on a surface of a magnetic yoke and the surfaces of the magnetic poles (311) of the rotor (31), and around the magnetic poles (311);
laying and fixing the reinforcement (32), the peel ply (33) and the flow guide medium (34) on the surfaces of the magnetic poles (311) in sequence, fixing the one end of the infusion pipe (35) to the outer side of the flow guide medium (34), fixing a semipermeable membrane (38) to the outer side of the flow guide medium (34) such that the one end of the infusion pipe (35) is located between the flow guide medium (34) and the semipermeable membrane (38), and fixing the one end of the gas extraction pipe (36) to an outer side of the semipermeable membrane (38); and
covering the reinforcement (32), the peel ply (33), the flow guide medium (34), the semipermeable membrane (38), the one end of the infusion pipe (35) and the one end of the gas extraction pipe (36) with the vacuum isolation film (37), and hermetically connecting the vacuum isolation film (37) to the rotor (31).

12. The vacuum assisted resin infusion method for the permanent-magnet machine rotor according to any one of claims 9-11, comprising at least one of the following items:
in the step of pretreating the resin (102), the vacuum degree used for deaerating the two-component resin ranges from -40 to -99 kPa, and the time for deaerating ranges from 5 to 30 minutes;
in the step of maintaining the pressure for vacuum (103), the vacuum degree maintained in the space between the vacuum isolation film (37) and the rotor (31) ranges from -45 to -85 kPa;
in the step of vacuum infusion (104), a flow rate of infusing the resin ranges from 200 to 1000 g/min;
further comprising the following step between the step of vacuum infusion (104) and the step of curing the resin (105): closing the infusion pipe (35) after the space between the vacuum isolation film (37) and the rotor (31) is filled with the resin, and continuously maintaining the vacuum degree in the gas extraction pipe (36) for 3 to 10 hours; and
in the step of curing the resin (105), the resin is warmed to a range of 40-90°C, and the temperature is maintained for 4-12 hours.

## Patentansprüche

1. System, aufweisend einen Rotor für einen Permanentmagnetmotor und eine vakuumunterstützte Harzinfusionsschutzbeschichtung auf dem Rotor des Permanentmagnetmotors, wobei das System ferner eine Versteifung (32), eine Abziehschicht (33) und ein Strömungsführungsmedium (34) aufweist, die nacheinander auf die Oberflächen der Magnetpole (311) des Rotors (31) aufgelegt sind, wobei ein Ende eines Infusionsrohrs (35) und ein Ende eines Gasextraktionsrohrs (36) jeweils an einer Außenseite des Strömungsführungsmediums (34) befestigt sind und ein Vakuumisolationsfilm (37) abdichtend mit dem Rotor (31) verbunden ist und die Versteifung (32), die Abziehschicht (33), das Strömungsführungsmedium (34), das eine Ende des Infusionsrohrs (35) und das eine Ende des Gasextraktionsrohrs (36) abdeckt,
wobei eine Achse des Rotors (31) in einer vertikalen Richtung angeordnet ist und sich das eine Ende des Infusionsrohrs (35) an einem unteren Ende der Magnetpole (311) befindet, während sich das eine Ende des Gasextraktionsrohrs (36) an einem oberen Ende der Magnetpole (311) befindet, und
eine halbdurchlässige Membran (38) zwischen dem Vakuumisolationsfilm (37) und dem Strömungsführungsmedium (34) angeordnet ist und sich das eine Ende des Infusionsrohrs (35) zwischen dem Strömungsführungsmedium (34) und der halbdurchlässigen Membran (38) befindet, während sich das eine Ende des Gasextraktionsrohrs (36) an einer Außenseite der halbdurchlässigen Membran (38) befindet.

2. System (3) nach Anspruch 1, **dadurch gekennzeichnet, dass** die Versteifung (32) mindestens eine Fasergewebeschicht aufweist.

3. System (3) nach Anspruch 2, **dadurch gekennzeichnet, dass** das Fasergewebe Glasfasergewebe, Kohlenstofffasergewebe oder Leinen ist.

4. System (3) nach Anspruch 2, **dadurch gekennzeichnet, dass** das Fasergewebe einachsiges Fasergewebe oder zweiachsiges Fasergewebe ist.

5. System nach einem der Ansprüche 1-4, wonach es ferner eine Harzvorbehandlungsvorrichtung (1), eine Flüssigkeitszuführ-Pumpvorrichtung (2) und eine Vakuumerzeugungsvorrichtung (4) aufweist, wobei die Harzvorbehandlungsvorrichtung (1) eine Harzrühr- und Entlüftungsvorrichtung (11) zum Rühren und Entlüften eines Zweikomponentenharzes und einen Harzflüssigkeitsvorratstank (12) aufweist, mit dem die Harzrühr- und Entlüftungsvorrichtung (11) mittels eines Flüssigkeitsablassrohrs für die Rühr- und Entlüftungsvorrichtung (13) verbunden ist;
der Harzflüssigkeitsvorratstank (12) mit der Flüssigkeitszuführ-Pumpvorrichtung (2) mittels eines Flüssigkeitseinlassrohrs für die Pumpe (5) verbunden ist und die Flüssigkeitszuführ-Pumpvorrichtung (2) zum Regeln einer Flussrate des durch die Flüssigkeitszuführ-Pumpvorrichtung (2) strömenden Harzes ausgebildet ist; und
die Flüssigkeitszuführ-Pumpvorrichtung (2) mit dem Infusionsrohr (35) verbunden ist und das Gasextraktionsrohr (36) mit der Vakuumerzeugungsvorrichtung (4) verbunden ist, wobei das Gasextraktionsrohr (36) mit einem Ventil (361) verbunden ist,
wobei die Vakuumerzeugungsvorrichtung (4) eine Vakuumpumpe (41), einen Vakuumtank (42), ein Vakuumventil (43) und einen Puffertank (44) aufweist, die in Reihe miteinander verbunden sind, wobei der Puffertank (44) mit dem Gasextraktionsrohr (36), der Vakuumtank (42) mit einem ersten Druckmessgerät (421) und der Puffertank (44) mit einem zweiten Druckmessgerät (441) verbunden ist.

6. System nach Anspruch 5, **dadurch gekennzeichnet, dass** die Harzrühr- und Entlüftungsvorrichtung (11) ein erstes Komponenteneinlassrohr (111), ein zweites Komponenteneinlassrohr (112), einen luftdichten Rührtank (113) und eine Evakuierungsvorrichtung für den luftdichten Rührtank (114) aufweist, wobei das erste Komponenteneinlassrohr (111) und das zweite Komponenteneinlassrohr (114) mit dem luftdichten Rührtank (113) verbunden sind, in dem eine Rührvorrichtung (1131) angeordnet ist, die Evakuierungsvorrichtung für den luftdichten Rührtank (114) mittels eines Entlüftungs-Gasextraktionsrohrs mit dem luftdichten Rührtank (113) verbunden ist und der luftdichte Rührtank (113) mit dem Flüssigkeitsablassrohr für die Rühr- und Entlüftungsvorrichtung (13) verbunden ist.

7. System nach Anspruch 5 oder Anspruch 6, **dadurch gekennzeichnet, dass** die Flüssigkeitszuführ-Pumpvorrichtung (2) eine Pumpe (21) und einen Durchflussmesser (22) aufweist, die miteinander verbunden sind, wobei der Durchflussmesser (22) mit dem Flüssigkeitseinlassrohr (5) für die Pumpe und die Pumpe (21) mit dem Infusionsrohr (35) verbunden ist.

8. System nach einem der Ansprüche 5-7, ferner aufweisend ein Heizgerät (6) zum Erwärmen des zwischen dem Vakuumisolationsfilm (37) und dem Rotor (31) infundierten Harzes, wobei ein Temperatursensor (39) auf dem Rotor (31) angeordnet ist.

9. Verfahren zur vakuumgestützten Harzinfusion für einen Rotor eines Permanentmagnetmotors, das die folgenden Schritte aufweist:
Einen Schritt des Aufbauens des Systems (3) nach einem der Ansprüche 1-8 auf Magnetpolen (311) eines Rotors (31);
Einen Schritt des Vorbehandelns des Harzes (102): Rühren und Entlüften eine Zweikomponentenharzes und Lagern des entlüfteten Harzes;
Einen Schritt des Aufrechterhaltens von Druck für das Vakuum (103): Evakuieren eines Raumes zwischen dem Vakuumisolationsfilm (37) und Magnetpolen (311) des Rotors (31) und Aufrechterhalten eines Vakuumgrades in dem Raum;
Einen Schritt der Vakuuminfusion (104): Infundieren des gelagerten Harzes zwischen dem Vakuumisolationsfilm (37) und Magnetpolen (311) des Rotors (31) mit einer konstanten Geschwindigkeit;
Einen Schritt des Aushärtens des Harzes (105): Beheizen des zwischen Vakuumisolationsfilm (37) und Magnetpolen (311) des Rotors (31) infundierten Harzes zum Erwärmen und Aushärten des Harzes; und
Einen Schritt des Entfernen des Zubehörs (106): Entfernen der Abziehschicht (33) und Zubehörteile (34, 37, 38) auf einer Außenseite der Abziehschicht (33).

10. Verfahren zur vakuumgestützten Harzinfusion für einen Rotor eines Permanentmagnetmotors nach Anspruch 9, **dadurch gekennzeichnet, dass** der Schritt des Aufbauens der Schutzbeschichtung (101) die folgenden Schritte aufweist:
Reinigen von Ausbauteilen auf einer Oberfläche eines Magnetjochs und den Oberflächen der Magnetpole (311) des Rotors (31) sowie um die Magnetpole (311) herum;
Auflegen und Befestigen der Versteifung (32), der Abziehschicht (33) und des Strömungsführungsmediums (34) in Reihe auf Oberflächen der Magnetpole (311) und Befestigen des einen Endes des Infusionsrohrs (35) und des einen Endes des Gasextraktionsrohrs (36) jeweils an der Außenseite des Strömungsführungsmediums (34); und
Bedecken der Versteifung (32), der Abziehschicht (33) und des Strömungsführungsmediums (34), des einen Endes des Infusionsrohrs (35) und des einen Endes des Gasextraktionsrohrs (36) mit dem Vakuumisolationsfilm (37) und abdichtendes Verbinden des Vakuumisolationsfilms (37) mit dem Rotor (31).

11. Verfahren zur vakuumgestützten Harzinfusion für einen Rotor eines Permanentmagnetmotors nach Anspruch 9, **dadurch gekennzeichnet, dass** die Schutzbeschichtung (3) für den Rotor des Permanentmagnetmotors ferner eine halbdurchlässige Membran (38), die zwischen dem Vakuumisolationsfilm (37) und dem Strömungsführungsmedium (34) angeordnet ist, aufweist und sich das eine Ende des Infusionsrohrs (35) zwischen dem Strömungsführungsmedium (34) und der halbdurchlässigen Membran (38) befindet, während sich das eine Ende des Gasextraktionsrohrs (36) an einer Außenseite der halbduchlässigen Membran (38) befindet,
wobei der Schritt des Aufbauens der Schutzbeschichtung (101) die folgenden Schritte umfasst:
Reinigen von Ausbauteilen auf einer Oberfläche eines Magnetjochs und den Oberflächen der Magnetpole (311) des Rotors (31) sowie um die Magnetpole (311) herum;
Auflegen und Befestigen der Versteifung (32), der Abziehschicht (33) und des Strömungsführungsmediums (34) in Reihe auf Oberflächen der Magnetpole (311) und Befestigen des einen Endes des Infusionsrohrs (35) an der Außenseite des Strömungsführungsmediums (34), Befestigen einer halbdurchlässigen Membran (38) an der Außenseite des Strömungsführungsmediums (34), so dass sich das eine Ende des Infusionsrohrs (35) zwischen dem Strömungsführungsmedium (34) und der halbdurchlässigen Membran (38) befindet, und Befestigen des einen Endes des Gasextraktionsrohrs (36) an einer Außenseite der halbdurchlässigen Membran (38); und
Bedecken der Versteifung (32), der Abziehschicht (33) und des Strömungsführungsmediums (34), der halbdurchlässigen Membran (38), des einen Endes des Infusionsrohrs (35) und des einen Endes des Gasextraktionsrohrs (36) mit dem Vakuumisolationsfilm (37) und abdichtendes Verbinden des Vakuumisolationsfilms (37) mit dem Rotor (31).

12. Verfahren zur vakuumgestützten Harzinfusion für einen Rotor eines Permanentmagnetmotors nach einem der Ansprüche 9-11, **dadurch gekennzeichnet, dass** es mindestens die folgenden Punkte aufweisen:
Beim Schritt der Harzvorbehandlung (102) liegt der zum Entlüften des Zweikomponentenharzes verwendete Vakuumgrad im Bereich von -40 bis -99 kPa und die Zeit zum Entlüften im Bereich von 5 bis 30 Minuten;
beim Schritt des Aufrechterhaltens von Druck für das Vakuum (103) liegt der im Raum zwischen dem Vakuumisolationsfilm (37) und dem Rotor (31) aufrechterhaltene Vakuumgrad im Bereich von -45 bis -85 kPa;
beim Schritt der Vakuuminfusion (104) liegt eine Flussrate der Harzinfusion im Bereich von 200 bis 1000 g/min;
ferner umfassend den folgenden Schritt zwischen Vakuuminfusion (104) und Aushärten des Harzes (105): Schließen des Infusionsrohrs (35), nachdem der Raum zwischen dem Vakuumisolationsfilm (37) und dem Rotor (31) mit dem Harz gefüllt ist, und fortgesetztes Aufrechterhalten des Vakuumgrades im Gasextraktionsrohr (36) für 3 bis 10 Stunden; und
beim Schritt des Aushärtens des Harzes (105) wird das Harz auf einen Bereich von 40-90 C erwärmt und die Temperatur für 4-12 Stunden gehalten.

## Revendications

1. Système comprenant un rotor de moteur à aimant permanent et un revêtement protecteur formé par infusion de résine sous vide sur le rotor de moteur à aimant permanent, ledit système comprenant en outre un renforcement (32), un pli pelliculable (33) et un support de guidage d'écoulement (34) disposés séquentiellement sur les surfaces de pôles magnétiques (311) du rotor (31), où une extrémité d'une conduite d'infusion (35) et une extrémité d'une conduite d'échappement gazeux (36) sont respectivement fixées sur une face extérieure du support de guidage d'écoulement (34), et un film d'isolation sous vide (37) est raccordé de manière étanche au rotor (31), recouvrant le renforcement (32), le pli pelliculable (33), le support de guidage d'écoulement (34), la première extrémité de la conduite d'infusion (35), et la première extrémité de la conduite d'échappement gazeux (36),
où un axe du rotor (31) est disposé dans la direction verticale, et la première extrémité de la conduite d'infusion (35) est située à une extrémité inférieure des pôles magnétiques (311), la première extrémité de la conduite d'échappement gazeux (36) étant située à une extrémité supérieure des pôles magnétiques (311), et
une membrane semi-perméable (38) est intercalée entre le film d'isolation sous vide (37) et le support de guidage d'écoulement (34), et la première extrémité de la conduite d'infusion (35) est située entre le support de guidage d'écoulement (34) et la membrane semi-perméable (38), la première extrémité de la conduite d'échappement gazeux (36) étant disposée sur une face extérieure de la membrane semi-perméable (38).

2. Système (3) selon la revendication 1, **caractérisé en ce que** le renforcement (32) comprend au moins une couche de tissu fibreux.

3. Système (3) selon la revendication 2, **caractérisé en ce que** le tissu fibreux est du tissu de fibres de verre, du tissu de fibres de carbone ou du lin.

4. Système (3) selon la revendication 2, **caractérisé en ce que** le tissu fibreux est un tissu fibreux uniaxial, ou un tissu fibreux biaxial.

5. Système selon l'une des revendications 1 à 4, comprenant en outre un dispositif de pré-traitement de résine (1), un dispositif de pompe d'alimentation en liquide (2) et un dispositif de génération de vide (4), où
le dispositif de pré-traitement de résine (1) comprend un dispositif de malaxage et de désaération de résine (11) pour le malaxage et la désaération d'une résine à deux composants, et un réservoir de résine liquide (12) auquel le dispositif de malaxage et de désaération de résine (11) est relié au moyen d'une conduite de sortie de liquide pour le dispositif de malaxage et de désaération (13) ;
le réservoir de résine liquide (12) est relié au dispositif de pompe d'alimentation en liquide (2) au moyen d'une conduite d'entrée de liquide pour la pompe (5), et le dispositif de pompe d'alimentation en liquide (2) est prévu pour commander le débit de la résine s'écoulant dans le dispositif de pompe d'alimentation en liquide (2) ; et
le dispositif de pompe d'alimentation en liquide (2) est relié à la conduite d'infusion (35), et la conduite d'échappement gazeux (36) est reliée au dispositif de génération de vide (4), la conduite d'échappement gazeux (36) étant reliée à une vanne (361),
où le dispositif de génération de vide (4) comprend une pompe à vide (41), un réservoir sous vide (42), une soupape de dépression (43) et un réservoir tampon (44) reliés séquentiellement entre eux, le réservoir tampon (44) étant relié à la conduite d'échappement gazeux (36), le réservoir sous vide (42) étant relié à un premier pressiomètre (421), et le réservoir tampon (44) étant relié à un deuxième pressiomètre (441).

6. Système selon la revendication 5, **caractérisé en ce que** le dispositif de malaxage et de désaération de résine (11) comprend une conduite d'entrée de premier composant (111), une conduite d'entrée de deuxième composant (112), une cuve de malaxage étanche à l'air (113), et un dispositif d'évacuation pour la cuve de malaxage étanche à l'air (114), la conduite d'entrée de premier composant (111) et la conduite d'entrée de deuxième composant (114) étant reliées à la cuve de malaxage étanche à l'air (113) où est disposé un dispositif de malaxage (1131), le dispositif d'évacuation pour cuve de malaxage étanche à l'air (114) étant relié à la cuve de malaxage étanche à l'air (113) par une conduite d'échappement gazeux de désaération, et la cuve de malaxage étanche à l'air (113) étant reliée à la conduite de sortie de liquide pour le dispositif de malaxage et de désaération (13).

7. Système selon la revendication 5 ou la revendication 6, **caractérisé en ce que** le dispositif de pompe d'alimentation en liquide (2) comprend une pompe (21) et un débitmètre (22) reliés entre eux, le débitmètre (22) est relié à la conduite d'entrée de liquide pour la pompe (5), et la pompe (21) est reliée à la conduite d'infusion (35).

8. Système selon l'une des revendications 5 à 7, comprenant en outre un dispositif de chauffage (6) pour chauffer la résine infusée entre le film d'isolation sous vide (37) et le rotor (31), dans lequel un capteur de température (39) est disposé sur le rotor (31).

9. Procédé d'infusion de résine sous vide pour un rotor de moteur à aimant permanent, comprenant les étapes suivantes :
une étape de construction du système (3) selon l'une des revendications 1 à 8 sur les pôles magnétiques (311) d'un rotor (31) ;
une étape de pré-traitement de la résine (102) : malaxage et désaération d'une résine à deux composants, et stockage de la résine désaérée ;
une étape de maintien de pression pour le vide (103) : évacuation d'un espace entre le film d'isolation sous vide (37) et les pôles magnétiques (311) du rotor (31), et maintien d'un degré de vide dans l'espace ;
une étape d'infusion sous vide (104) : infusion de la résine stockée entre le film d'isolation sous vide (37) et les pôles magnétiques (311) du rotor (31) à une vitesse constante ;
une étape de durcissement de la résine (105) : chauffage de la résine infusée entre le film d'isolation sous vide (37) et les pôles magnétiques (311) du rotor (31) pour chauffer et durcir la résine ; et
une étape de retrait des accessoires (106) : retrait du pli pelliculable (33) et des accessoires (34, 37, 38) sur une face extérieure du pli pelliculable (33).

10. Procédé d'infusion de résine sous vide pour un rotor de moteur à aimant permanent selon la revendication 9, **caractérisé en ce que** l'étape de construction du revêtement protecteur (101) comprend les étapes de :
nettoyage des accessoires sur la surface d'une culasse magnétique et les surfaces des pôles magnétiques (311) du rotor (31), et autour des pôles magnétiques (311) ;
dépôt et fixation séquentiels du renforcement (32), du pli pelliculable (33) et du support de guidage d'écoulement (34) sur les surfaces des pôles magnétiques (311), et fixations respectives de la première extrémité de la conduite d'infusion (35) et de la première extrémité de la conduite d'échappement gazeux (36) sur la face extérieure du support de guidage d'écoulement (34) ; et
couverture du renforcement (32), du pli pelliculable (33), du support de guidage d'écoulement (34), de la première extrémité de la conduite d'infusion (35) et de la première extrémité de la conduite d'échappement gazeux (36) avec le film d'isolation sous vide (37), et raccordement étanche du film d'isolation sous vide (37) au rotor (31).

11. Procédé d'infusion de résine sous vide pour un rotor de moteur à aimant permanent selon la revendication 9, **caractérisé en ce que** le revêtement protecteur (3) pour le rotor de moteur à aimant permanent comprend en outre une membrane semi-perméable (38), intercalée entre le film d'isolation sous vide (37) et le support de guidage d'écoulement (34), et **en ce que** la première extrémité de la conduite d'infusion (35) est située entre le support de guidage d'écoulement (34) et la membrane semi-perméable (38), la première extrémité de la conduite d'échappement gazeux (36) étant située sur une face extérieure de la membrane semi-perméable (38),
l'étape de construction le revêtement protecteur (101) comprenant les étapes de : nettoyage des accessoires sur la surface d'une culasse magnétique et les surfaces des pôles magnétiques (311) du rotor (31), et autour des pôles magnétiques (311) ;
dépôt et fixation séquentiels du renforcement (32), du pli pelliculable (33) et du support de guidage d'écoulement (34) sur les surfaces des pôles magnétiques (311), et fixation de la première extrémité de la conduite d'infusion (35) sur la face extérieure du support de guidage d'écoulement (34), fixation d'une membrane semi-perméable (38) sur la face extérieure du support de guidage d'écoulement (34) de telle manière que la première extrémité de la conduite d'infusion (35) est située entre le support de guidage d'écoulement (34) et la membrane semi-perméable (38), et fixation de la première extrémité de la conduite d'échappement gazeux (36) sur une face extérieure de la membrane semi-perméable (38) ; et
couverture du renforcement (32), du pli pelliculable (33), du support de guidage d'écoulement (34), de la membrane semi-perméable (38), de la première extrémité de la conduite d'infusion (35) et de la première extrémité de la conduite d'échappement gazeux (36) avec le film d'isolation sous vide (37), et raccordement étanche du film d'isolation sous vide (37) au rotor (31).

12. Procédé d'infusion de résine sous vide pour un rotor de moteur à aimant permanent selon l'une des revendications 9 à 11, **caractérisé en ce qu'**il comprend au moins une des caractéristiques suivantes :
lors de l'étape de pré-traitement de la résine (102), le degré de vide exigé pour désaérer la résine à deux composants est compris entre -40 et -99 kPa, et la durée de désaération est comprise entre 5 et 30 minutes ;
lors de l'étape de maintien de la pression pour le vide (103), le degré de vide maintenu dans l'espace entre le film d'isolation sous vide (37) et le rotor (31) est compris entre -45 et -85 kPa ;
lors de l'étape d'infusion sous vide (104), un débit d'infusion de la résine est compris entre 200 et 1000 g/min ;
l'étape suivante étant en outre comprise entre l'étape d'infusion sous vide (104) et l'étape de durcissement de la résine (105) : fermeture de la conduite d'infusion (35) après remplissage de l'espace entre le film d'isolation sous vide (37) et le rotor (31), et maintien continu du degré de vide dans la conduite d'échappement gazeux (36) pendant 3 à 10 heures ; et
lors de l'étape de durcissement de la résine (105), la résine est chauffée entre 40 et 90°C, et la température est maintenue pendant 4 à 12 heures.
